# EUROPEAN PATENT SPECIFICATION

(11) **EP 1 932 363 B1**
(45) Date of publication and mention of the grant of the patent: **18.05.2016**
(21) Application number: 06799078.8
(22) Date of filing: 04.10.2006
(51) Int. Cl.: H04N 19/61, H04N 19/42, H04N 19/93, H04N 19/34, H04N 19/36, H04N 19/52, H04N 19/70, H04N 19/53

(54) **METHOD AND APPARATUS FOR RECONSTRUCTING IMAGE BLOCKS**
VERFAHREN UND VORRICHTUNG ZUM REKONSTRUIEREN VON BILDBLÖCKEN
PROCEDE ET APPAREIL PERMETTANT DE RECONSTRUIRE DES BLOCS D'IMAGES

(30) Priority: 05.10.2005 US 723474 P; 24.03.2006 US 785387 P; 21.07.2006 KR 20060068314; 22.08.2006 KR 20060079393
(43) Date of publication of application: 18.06.2008
(73) Proprietor: LG Electronics Inc., Yongdungpo-gu Seoul 150-010 (KR)
(72) Inventor: PARK, Seung Wook, Seoul 151-891 (KR); JEON, Byeong Moon, Gwangjin-gu, Seoul 143-754 (KR); UM, Soung Hyun, Dongan-gu, Anyang-si Gyeonggi-do, 431-760 (KR); PARK, Ji Ho, Gangnam-gu, Seoul 135-903 (KR); KIM, Dong Seok, Seoul 138-764 (KR)
(74) Representative: Diehl & Partner GbR
(86) International application number: PCT/KR2006/003998
(87) International publication number: WO 2007/040344

(56) References cited:
- WO-A1-01/39503
- WO-A1-01/49036
- US-A1- 2004 001 635
- RIDGE J ET AL: "FGS coding efficiency enhancements", 15. JVT MEETING; 72. MPEG MEETING; 16-04-2005 - 22-04-2005; BUSAN, KR;(JOINT VIDEO TEAM OF ISO/IEC JTC1/SC29/WG11 AND ITU-T SG.16 ),, no. JVT-O055, 14 April 2005 (2005-04-14), XP030006000, ISSN: 0000-0417
- JUSTIN RIDGE ET AL: "FGS block enhancements for scalable video coding", 70. MPEG MEETING; 18-10-2004 - 22-10-2004; PALMA DE MALLORCA; (MOTIONPICTURE EXPERT GROUP OR ISO/IEC JTC1/SC29/WG11),, no. M11428, 14 October 2004 (2004-10-14), XP030040202, ISSN: 0000-0251
- BAO Y ET AL: "Improvements of Fine Granularity Scalability for Low-Delay Applications", 15. JVT MEETING; 72. MPEG MEETING; 16-04-2005 - 22-04-2005; BUSAN, KR;(JOINT VIDEO TEAM OF ISO/IEC JTC1/SC29/WG11 AND ITU-T SG.16 ),, no. JVT-O054r1, 17 April 2005 (2005-04-17) , XP030005999, ISSN: 0000-0417
- RIDGE J ET AL: "Simplification and unification of FGS", 19. JVT MEETING; 31-03-2006 - 07-04-2006; GENEVA, CH; (JOINT VIDEOTEAM OF ISO/IEC JTC1/SC29/WG11 AND ITU-T SG.16 ),, no. JVT-S077, 28 March 2006 (2006-03-28), XP030006456, ISSN: 0000-0409
- WANG X ET AL: 'CE7: Mult FGS layer for low delay' 18. JVT MEETING; 75. MPEG MEETING; 14-01-2006 - 20-01-2006; BANGKOK,TH; (JOINT VIDEO TEAM OF ISO/IEC JTC1/SC29/WG11 AND ITU-T SG.16 ), no. JVT-R077, 11 January 2006, XP030006344 ISSN: 0000-0410

## Description

### 1. Technical Field

The present invention relates to technology for coding video signals in a Signal-to-Noise Ratio (SNR) scalable manner and decoding the coded data.

### 2. Background Art

A Scalable Video Codec (SVC) scheme is a video signal encoding scheme that encodes video signals at the highest image quality, and that can represent images at low image quality even though only part of a picture sequence (a sequence of frames that are intermittently selected from among the entire picture sequence) resulting from the highest image quality encoding is decoded and used.

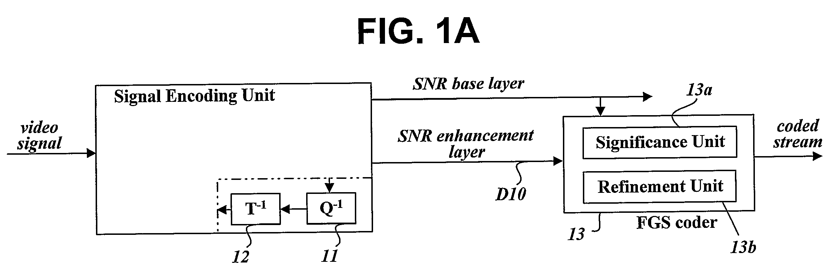

An apparatus for encoding video signals in a scalable manner performs transform coding, for example, a Discrete Cosine Transform (DCT) and quantization, on data encoded using motion estimation and predicted motion, with respect to each frame of received video signals. In the process of quantization, information is lost. Accordingly, a signal encoding unit in the encoding apparatus as illustrated in FIG. 1A, obtains a difference between the original data and the encoded data by performing inverse quantization 11 and an inverse transform 12 on the encoded data and subtracting this encoded data from the original data. The encoder then generates SNR enhancement layer data D10 in a DCT domain by performing a DCT transform and quantization on the difference. By providing the SNR enhancement layer data to improve an SNR as described above, image quality is gradually improved as the decoding level of the SNR enhancement layer data increases. This is referred to as Fine Grained Scalability (FGS). Furthermore, the FGS coder 13 of FIG. 1A performs coding on the SNR enhancement layer data to convert and parse the data into a data stream. The coding is performed with a significance data path (hereinafter referred to as a 'significance path') and a refinement data path (hereinafter referred to as a 'refinement path') distinguished from each other. In a significance path, SNR enhancement layer data, with co-located data of an SNR base layer having a value of 0, is coded according to a first scheme, while in a refinement path, SNR enhancement layer data, with co-located data of the SNR base layer having a value other than 0, is coded according to a second scheme.

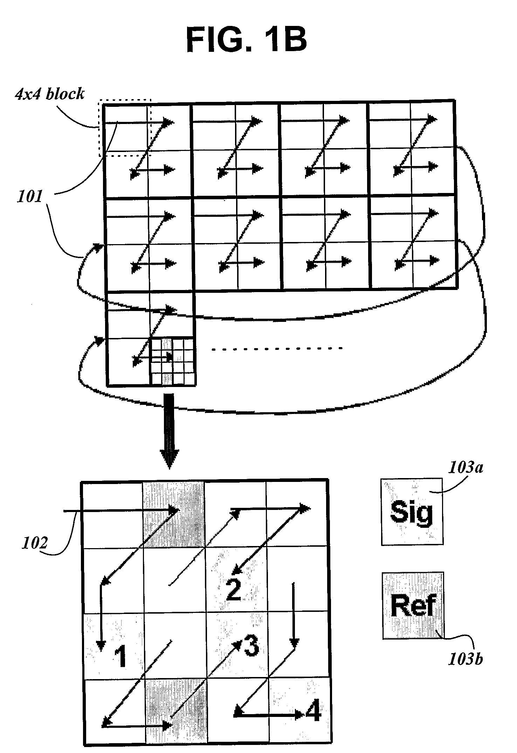

FIG. 1B illustrates a process in which a significance path coding unit 13a codes data on a significance path. With respect to SNR enhancement layer pixel data, in every cycle, a process of acquiring a data stream (significance data 103a), which lists data not including refinement data along a predetermined zigzag scanning path 102, while selecting 4x4 blocks in the selection sequence 101 illustrated in FIG. 1B, is performed. This data stream is coded using a method for which the number of runs of 0's is specified, for example, S3 code. Data other than 0 is coded later using a separate method.

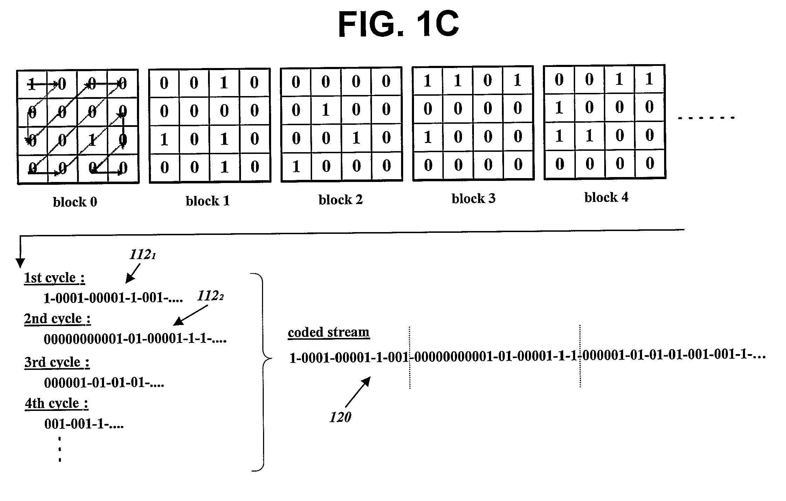

FIG. 1C illustrates a process in which the significance path coding unit 13a performs coding while selecting each block in each cycle as a specific example. Data value 1 in a block, which is illustrated in FIG. 1C as an example, does not represent an actual value, but represents a simplified indication of a value other than 0 in the case where a Discrete Cosine Transform coefficient has a nonzero value. The notation of the values of data in blocks described below is the same.

The process illustrated in FIG. 1C as an example is described in brief below. The significance path coding unit 13a performs a first cycle for each block by sequentially listing data about 0 (112₁) (since refinement data having a value other than 0 is not target data, refinement data is excluded), and is read along a predetermined zigzag scan path until 1 is encountered, while selecting respective blocks in the sequence of selection of blocks illustrated in FIG. 1B. The significance path coding unit 13a performs a second cycle for each block by sequentially listing data about 0 (112₂) while sequentially selecting blocks and performing scanning from a location next to the last location of the first cycle along the scan path until a location having a 1 is encountered. This process is repeated for additional cycles until the data is encoded. The significance path coding unit 13a then generates a data stream 120 by listing data in the sequence of cycles while repeatedly performing the same process on all data in a current picture. This data stream may be accompanied by another coding process as mentioned above.

In the above-described coding, data coded first in the sequence of cycles are first transmitted. Meanwhile, a stream of SNR enhancement layer data (hereinafter abbreviated as 'FGS data') may be cut during transmission in the case where the bandwidth of a transmission channel is narrow. In this case, a large amount of data, which pertains to data 1 affecting the improvement of video quality and is closer to a DC component, is cut.

The contribution *"FGS coding efficiency enhancements"* to the 15. JVT MEETING / 72. MPEG MEETING hold from April 16 to 22 in 2005 in Busan (Korea) having the number JVT-0055 discloses two modifications to the fine granularity scalability (FGS) algorithm that improve coding efficiency: When FGS is truncated, the decoder assumes missing values to be zero. Thus, it is proposed to code coefficients with the greatest possibility of being non-zero first. This is achieved by grouping blocks according to their scan position and then to code the groups in decreasing order of the probability that the next coefficient is non-zero. In essence, this document discloses the features of the preamble of the independent claims.

The contribution *"FGS block enhancements for scalable video coding"* to the 70. MPEG MEETING hold from October 18 to 22 in 2004 in Palma de Mallorca having the number M11428 discloses a scheme for achieving fine granular scalability in a layered coding context. In a block in the enhancement layer, scanning positions are dealt with in a zig-zag manner beginning from an upper left corner of the data block. All codec block flag values are encoded in a first coding cycle, and interleaved with first non-zero coefficients in the blocks for those having nonzero coefficients.

The contribution *"Improvements of Fine Granularity Scalability for Low-Delay Applications"* to the 15. JVT MEETING / 72. MPEG MEETING hold from April 16 to 22 in 2005 in Busan (Korea) having the number JVT-0054r1 discloses that in a fine granularity scalability (FGS) algorithm the coefficients in the enhancement layer can be classified into three categories with increasing probability of the prediction error being a nonzero in the FGS layer. The three categories are: The coefficient in a block that does not have any nonzero coefficient in the base layer; The coefficient in a block that has some nonzero coefficients in the base layer, but the coefficient itself is coded in the base layer as zero; The coefficient in a block that has some nonzero coefficient in the base layer, in addition, the coefficient has already been coded as a non-zero value in the base layer. Different weighting factors are used for forming the prediction for coefficients in each category.

Document JVT-R077, which has been published after the priority claim US 60/723,474 of October 5, 2005 of the present application discloses an improved FGS layer coding. Close-loop P frames are coded using a temporal prediction signal which is adaptively formed from both the enhancement layer reference frame and base layer reference frame based on the information coded in the base layer. The prediction of the first FGS layer is formed in the same way as that in a multi-loop structure. For the second FGS layer, an initial prediction is first calculated according to the AR-FGS method but using the discrete base layer as "base layer" and the second FGS layer as "enhancement layer". Then, the initial prediction is added with the first FGS layer reconstructed residual and the sum is used as actual prediction.

Document JVT-S077, which has been published after the priority claims US 60/723,474 of October 5, 2005 and US 60/785,387 of March 24, 2006 of the present application discloses an improved FGS coding which is alternative to the improved FGS coding disclosed in JVT-R077. The alternative FGS coding is described by the following pseudocode:

```
 For each cycle
  For each block
       For each position in cycle
           If current luma coefficient not decoded
               If current luma coefficient not refinement coefficient
                   Decode a non-zero luma coefficient and preceding zeros
               Else
                   Decode refinement information for current luma coeff.
           If current chroma coefficient not decoded
               If current chroma coefficient not refinement coefficient
                   Decode a non-zero chroma coefficient and preceding zeros
               Else
                   Decode refinement information for current chroma coeff.
```

### 3. Disclosure of Invention

It is the object of the present invention to provide a method of reconstructing an image block in a first picture layer.

The above object is solved by the combination of features of the independent claims. Preferred embodiments are defined in the dependent claims.

In one embodiment, the method includes determining reference blocks for a plurality of data blocks, and generating a sequence of residual data blocks based on the reference blocks and the plurality of data block. Data from the sequence of residual data blocks is parsed into a data stream on a cycle-by-cycle basis such that at least one residual data block earlier in the sequence is skipped during a cycle if data closer to DC components exists in a residual data block later in the sequence.

The present invention further relates to apparatuses for reconstructing an image block in a first picture layer, and apparatuses constructing a residual video data stream.

### 4. Brief Description of Drawings

The above and other objects, features and advantages of the present invention will be more clearly understood from the following detailed description taken in conjunction with the accompanying drawings, in which:
FIG. 1A is a diagram schematically illustrating a conventional apparatus for encoding video signals with emphasis on the coding of FGS data;
FIG. 1B is a diagram illustrating an example of a conventional process of coding a picture having FGS data;
FIG. 1C is a diagram illustrating a conventional method of coding FGS data into a data stream;
FIG. 2A is a diagram schematically illustrating an apparatus for encoding video signals according to an embodiment of the present invention, with emphasis on the coding of FGS data;
FIG. 2B is a diagram illustrating the operation of prediction for a picture, which is performed by the apparatus of FIG. 2A,
FIG. 3 is a flowchart illustrating a method of coding respective blocks within a picture while scanning the blocks according to an embodiment of the present invention;
FIG. 4 is a diagram illustrating a process of scanning or skipping respective blocks according to the method of FIG. 3 as an example;
FIG. 5 is a diagram illustrating a process of arranging data close to DC components in the forward part of an encoded data stream according to the method of FIG. 3 in comparison with that of the conventional method;
FIG. 6 is a diagram schematically illustrating an apparatus for decoding a data stream encoded by the apparatus of FIG. 2A;
FIG. 7 illustrates a process of finely adjusting the motion vector of the FGS base layer of a current frame in the picture of the FGS enhanced layer of a reference frame to predict the FGS enhanced layer of the current frame according to an embodiment of the present invention;
FIG. 8 illustrates a process of searching the FGS enhanced layer picture of a reference frame for an FGS enhanced layer reference block for an arbitrary block in a current frame, independent of the motion vector of an FGS base layer of the arbitrary block according to another embodiment of the present invention;
FIG. 9 is a block diagram of an apparatus which encodes a video signal to which the present invention may be applied; and
FIG. 10 is a block diagram of an apparatus which decodes an encoded data stream to which the present invention may be applied.

### 5. Modes for Carrying out the Invention

Reference will be made to the drawings, in which the same reference numerals are used throughout the different drawings to designate the same components.

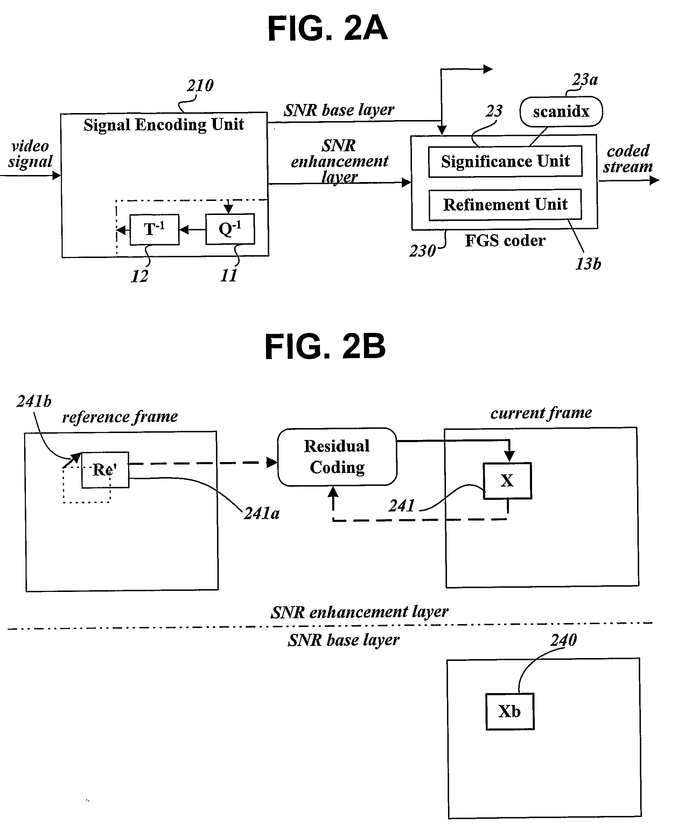

FIG. 2A illustrates an encoding apparatus for performing an encoding method according to an embodiment of the present invention. An encoder 210 shown in FIG. 2A encodes input signals, thereby generating SNR base layer data and SNR enhancement layer data (FGS data). The base layer represents lower quality pictures than pictures represented by the enhanced layer. Since the generation of the SNR base layer data is not related to the present invention and is well-known, a description thereof is omitted here for the sake of brevity. The generation of the FGS data is performed as described below.

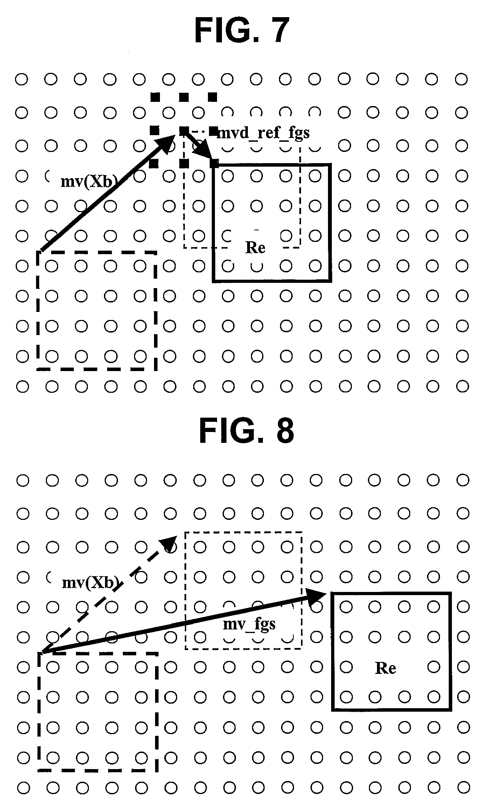

The encoder 210 acquires a difference (data used to compensate for errors occurring at the time of encoding) from encoded data by performing inverse quantization 11 and an inverse transform 12 on previously encoded SNR base layer data (if necessary, magnifying inversely transformed data), and obtaining a difference between this data and the original base layer data (same as previously described in the Background). As illustrated in FIG. 2B, with respect to each macroblock 241 of a frame obtained in the above-described manner, a reference block 241a is found and a motion vector 241b to the reference block 241 is obtained. When the reference block 241a is found, the encoder 210 codes difference data (residual data) between data in the reference block 241a and data in the current macroblock 241 as a residual current block. Furthermore, appropriate coding is performed on the obtained motion vector 241b. When a frame is coded into residual data in the above-described manner, FGS data in a DCT domain is generated by sequentially performing a DCT transform and quantization on the encoded residual frame, and the result is the FGS data applied to a following FGS coder 230. Further detailed embodiment for generating the residual data blocks will be described in greater detail below with respect to FIGS. 7-10; wherein the FGS enhanced layer reference block 241a will be referred to as reference block Re'.

To perform an FGS coding method to be described later, the significance path coding unit 23 of the FGS coder 230 manages a variable scan identifier scanidx 23a for tracing the location of a scan path on a block. The variable scanidx is only an example of the name of a location variable (hereinafter abbreviated as a 'location variable') on data blocks, and any other name may be used therefore.

An appropriate coding process is also performed on SNR base data encoded in the apparatus of FIG. 2A. This process is not directly related to the present invention, and therefore an illustration and description thereof are omitted here for the sake of clarity.

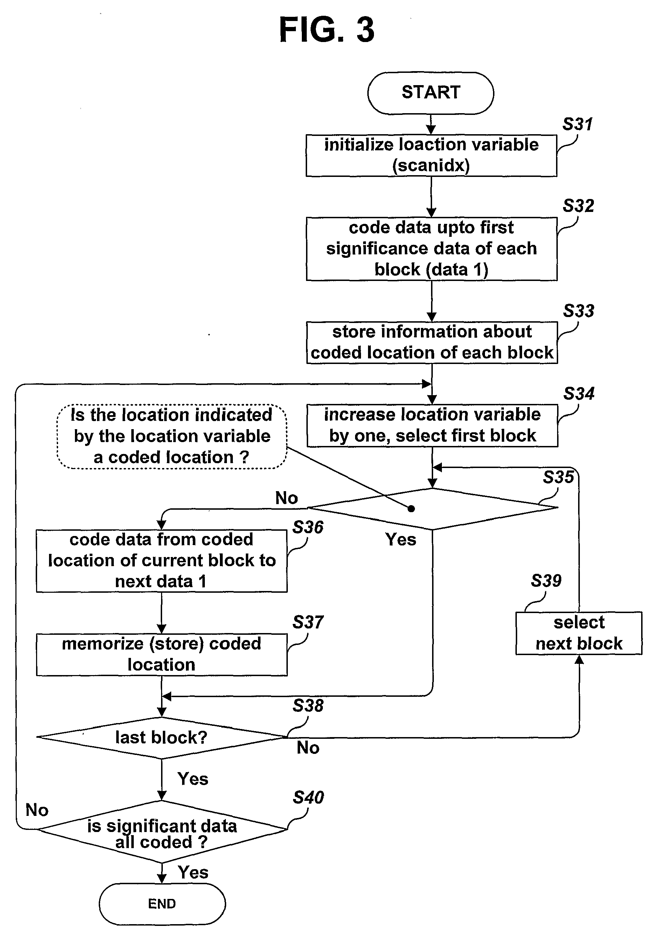

The significance path coding unit 23 of FIG. 2A sequentially selects 4x4 blocks for a single picture (which may be a frame, a slice or the like) in the manner illustrated in FIG. 1B, and codes data in a corresponding block according to a flowchart illustrated in FIG. 3, which will be described below. This process, as described below, parses data from the data blocks into a data stream. Of course, since the method to be described below can be applied to respective blocks even in the case where the sequence of selecting blocks is conducted in a manner other than the manner illustrated in FIG. 1B, the present invention is not limited to a particular sequence of selecting blocks.

The significance path coding unit 23 first initializes (e.g., = 1) the location variable 23a at step S31. The respective blocks are selected in a designated sequence (e.g., by design choice or standard). At step S32, a data section is coded along a zigzag scan path (see Fig. 1C for example) for each selected block until data 1 (which is referred to as 'significance data') is encountered. The value at the last location of the data section coded for each block, that is, the location at which data 1 exists, is stored as a coded location variable sbidx (also referred to as a coding end data location indicator or other appropriate name) at step S33. As will be recalled, a data value 1 in a block, does not represent an actual value, but represents a simplified indication of a value other than 0 in the case where a Discrete Cosine Transform coefficient has a nonzero value. When the first cycle is finished, the location variable 23a is increased by one at step S34. According to the number of performed cycles, the value of the location variable 23a increases, therefore the location variable 23a indicates the number of cycles and may also be referred to as the cycle indicator.

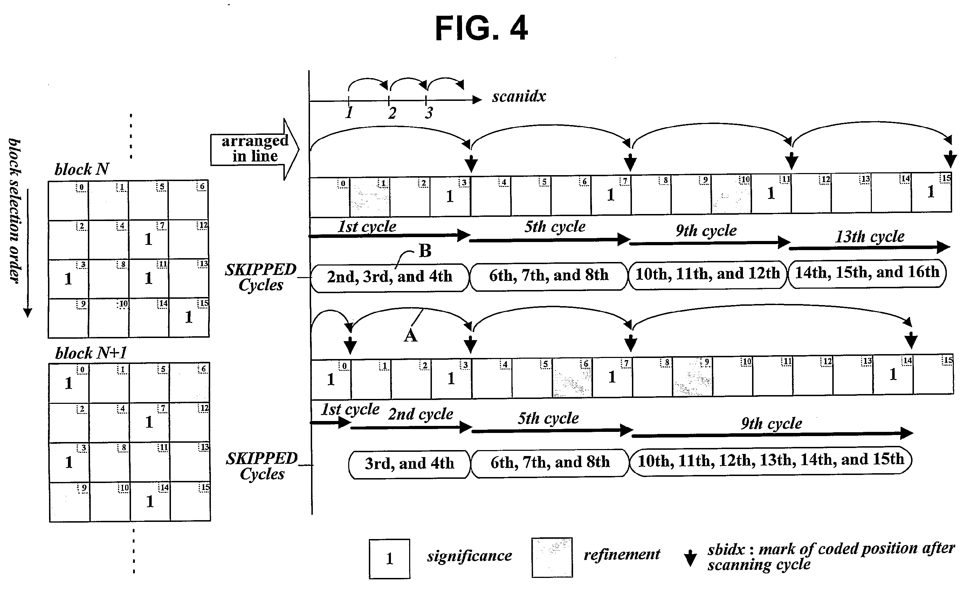

Next, a second cycle is performed starting from the first block in the designated sequence as the selected block. Whether the location currently indicated by the location variable scanidx 23a is a previously coded location is determined by comparing the coding end location indicator sbidx of a selected block with the cycle indicator scanidx 23a at step S35. Namely, if the coding end location indicator sbidx for the selected block is greater than or equal to the cycle indicator scanidx, the location in the selected block indicated by the variable scanidx has been coded. It should be remembered that the location is the location along the zig-zag path of Fig. 1B, where location "0" is the upper left hand corner and each location number along the zig-zag path is one plus the location number for the previous location on the zig-zag path. This is shown in Fig. 4, which illustrates an example of the process of Fig. 3 applied to two blocks N and N+1 in the block selection sequence. Fig. 4 also shows the order in which the data is coded for each block N and 'N+1 as well as the cycles during which coding takes place and the cycles skipped. In the example of FIG. 4, mark A denotes a data section on a block N+1, which is coded in the second cycle. In the example of FIG. 4, the location "2" of block N exists in the section coded in the first cycle, and therefore block N is skipped in the second cycle.

Returning to step S35, the current block is skipped if the location is a previously coded location, and the process proceeds to the subsequent step S39 if the skipped block is not the last block within the current picture at step S38. If the location currently indicated by the location variable 23a is not a coded location, coding is performed on a data section from the previously coded location (the location indicated by the variable sbidx) to the location where data 1 exists, at step S36. Of course, when the coding is completed, the coded location variable sbidx for the block is updated at step S37. If the currently coded block is not the last block at step S38, the process proceeds to the subsequent block at step S39.

The significance path coding unit 23 repeatedly performs the above-described steps S34 to S39 until all significance data is coded at step S40.

Returning to the example of Fig. 4, the block N is skipped in third and fourth cycles after the second cycle (mark B), and a data section up to significance data at location 7 on a scan path is coded in a fifth cycle.

In another embodiment according to the present invention, a temporary matrix may be created for each block and the corresponding locations of the temporary matrix may be marked for the completion of coding for coded data (for example, set to 1), instead of storing previously coded locations. In the present embodiment, when it is determined whether the current location indicated by the location variable 23a is a coded location at step S35, the determination is performed by examining whether the value at the location of the temporary matrix corresponding to the location variable is marked for the completion of coding.

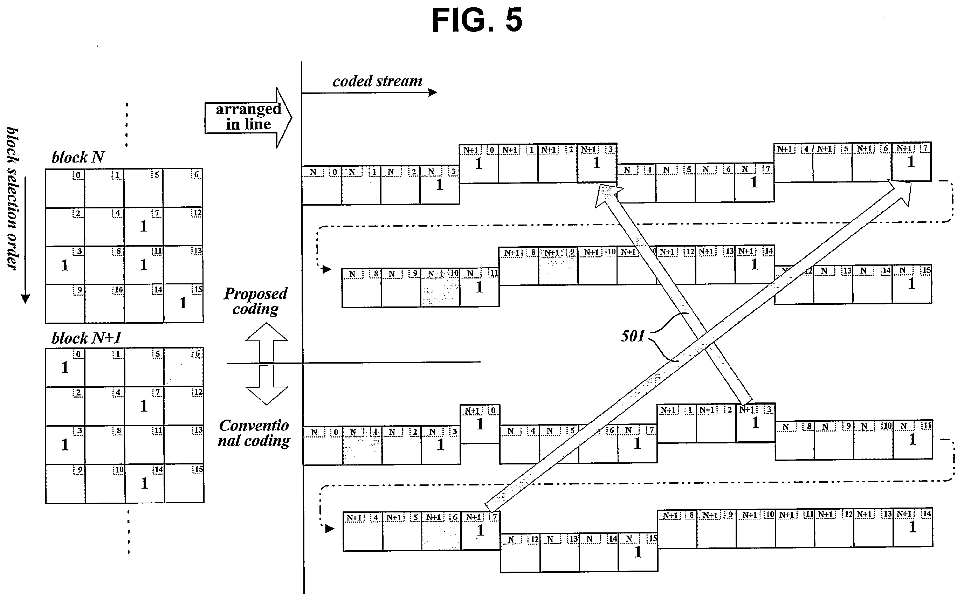

Since, in the above-described process, data coded in the preceding cycle is arranged in the forward part of a data stream, there is a strong possibility that significance data located at a forward location on a scan path will be first coded and transmitted regardless of the frequency thereof, when blocks are compared with each other. To further clarify this, FIG. 5 illustrates a data stream that is coded for two blocks N and N+1 presented in the example of FIG. 4, in comparison with a data stream based on the conventional coding method described in the Background of Invention section.

As illustrated in the example of FIG. 5, the numbers of pieces of significance data are almost the same in the same sections from the start of a coded stream, compared to those based on the conventional coding method. However, in light of the attributes of the significance data, in the coding according to the present invention, significance data placed at forward locations on the scan path of a block are located in the forward part of a coded stream, compared to the conventional method (see, for example, 501 in Fig. 5). Since the data is placed at forward locations on the scan path of a block (in FIG. 5, numbers in the right upper portions of respective blocks indicate sequential positions on the path), the data is closer to DC components than rearward data DCT coefficients. As such, the present invention transmits more significance data close to DC components on average than the conventional method in the case where transmission is interrupted. For example, data from a sequence of data blocks is parsed into a data stream on a cycle-by-cycle basis such that at least one data block earlier in the sequence is skipped during a cycle if data closer to DC components exists in a data block later in the sequence.

In another embodiment of the present invention, another value may be determined at step S35 for determining whether the location indicated by the location variable 23a is a coded location. For example, a transformed value is determined from the value of the location variable 23a. A vector may be used as a function for transforming a location variable value. That is, after the value of vector[0..15] has been designated in advance, whether the location indicated by the value of the element 'vector[scanidx]4 corresponding to the current value of the location variable 23a is an already coded location is determined at the determination step at step S35. If the elements of the vector 'vector[]' are set to monotonically increasing values, as in {0,1,2,3,4,5,6,7,8,9,10,11,12,13,14, 15}, the process becomes the same as that of the embodiment of FIG. 3. However, if a vector is set such that a value not less than the value of a location variable scanidx is designated as a transform value with the elements of the vector 'vector[]' set to, for example, {3,3,3,3,7,7,7,7,11,11,11,11,15,15,15,15}, a data section from the coded location to subsequent data 1 is coded for the block in the case where the value `vector[scanidx]', obtained by transformation via the location variable, is larger than the coded location variable sbidx of the corresponding block, even though the current location designated by the location variable 23a is already coded in each cycle.

Accordingly, by appropriately setting the value of the transform vector 'vector[]', the extent to which significance data located in the forward part of the scan path is located in the forward part of the coded stream, compared to that in the conventional method, can be adjusted.

The elements of the vector designated as described above are not directly transmitted to the decoder, but can be transmitted as mode information. For example, if the mode is 0, it indicates that the vector used is {0,1,2,3,4,5,6,7,8,9,10,11,12,13,14,15}. If the mode is 1, a grouping value is additionally used and designates the elements of a vector used. When the grouping value is 4, the same value is designated for each set of 4 elements. In more detail, when vector {3, 3, 3, 3, 7, 7, 7, 7, 11, 11, 11, 11, 15, 15, 15, 15} is used if the mode is 1 and the grouping value is 4, and the mode and grouping information is transmitted to the decoder. Furthermore, if the mode is 2, values at the last locations of respective element groups for each of which the same value is designated are additionally used. For example, when the mode is 2 and the set of values additionally used is {5, 10,15}, it indicates that the vector used is {5,5,5,5,5,5,10,10,10,10,10,15,15,15,15,15}.

A method of decoding data in a decoding apparatus receiving the data stream coded as described above is described below.

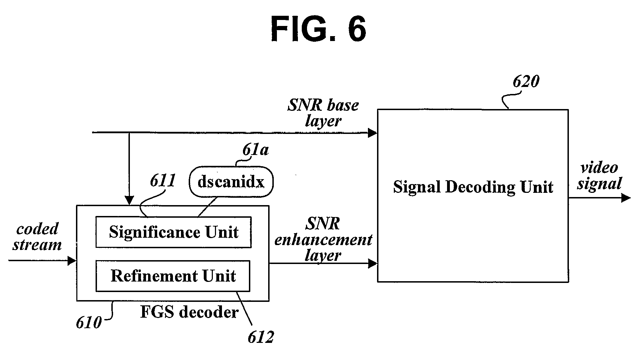

FIG. 6 is a block diagram illustrating an embodiment of an apparatus for decoding a data stream coded and transmitted by the apparatus of FIG. 2A. The data stream received by the apparatus of FIG. 6 is data that has undergone an appropriate decoding process and, thereby, has been decompressed in advance. When the stream of FGS data coded in the manner described above is received, the significance path decoding unit 611 of the FGS decoder 610 decodes a significance data stream and constructs each picture. Meanwhile, the refinement path decoding unit 612 decodes a refinement data stream and supplements each picture with the data, thereby completing the picture. Since the decoding of refinement data is not directly related to the present invention, a description thereof is omitted here for the sake of clarity.

At the time of decoding a significance data stream, the significance path decoding unit 611 performs the process of FIG. 3. That is, it performs the process in which the coding process is replaced with a decoding process in the flowchart of FIG. 3. In this process, the significance data stream is decoded or parsed into a sequence of data blocks. Namely, the significance data stream of received coded FGS data is divided into data sections to data 1, that is, a units of "0..001", and the sequence of data blocks are filled with the data sections along a zigzag scan path on each the block. When a block is filled with the data, a location is not filled with data but is skipped in the case where the value at the corresponding location in the SNR base layer is not 0 (that is, a location in the block that is to be filled corresponds to refinement data). The skipped location is filled with data by the refinement path decoding unit 612. In the following description, filling a block with data means filling the block with data while skipping locations to be filled with refinement data.

The significance path decoding unit 611 initializes the location variable dscanidx 61a (e.g., =1) at step S31. As will be apparent, this variable may also be referred to as the cycle indicator and indicates a current cycle. For each block in designated sequence, the significance path decoding unit 611 fills a selected block with data up to data 1 from the significance data stream, for example, "0..001", along a zigzag scan path at step S32. The value for the last location which is filled with data for each of the respective blocks, that is, the location at which data 1 is recorded, is stored in a decoded location variable dsbidx at step S33. The variable dsbidx may also be referred to as the filling end data location indicator. After the first cycle is finished, the location variable 61a is increased by one at step S34. Thereafter, a process of performing a second cycle while sequentially selecting the respective blocks starting with the first one (step S34) is conducted. By comparing the filling end data location indicator sbidx of the selected block with the cycle indicator 61a, it is determined whether the location indicated by the variable 61a is a location already filled with data at step S35. Namely, if the filling end data location indicator dsbidx is greater than or equal to the cycle indicator dscanidx, the location indicated by the location variable dscanidx contains decoded data. If the location is a location filled with data, the current block is skipped. If the skipped block is not the last block within the current picture at step S38, the process proceeds to the subsequent block at step S39. If the location indicated by the location variable 61a is not a location filled with data, a data section from the previously filled location (a location designated by dsbidx) to data 1 in the significance data stream is read, and filling is performed at step S36. Of course, when this step is completed, the decoded location variable for the block, that is, the value sbidx of the last location filled with data, is updated at step S37. Meanwhile, if the current decoded block is not the last block at step S38, the process proceeds to the subsequent block at step S39.

If the block is the last block, then the process returns to step S34, where the location variable dscanidx is incremented, and another cycle begins.

The significance path decoding unit 611 repeatedly performs the above-described steps S34 to S39 on the current picture until the last significance data is filled at step S40, thereby decoding a picture. The subsequent significance data stream is used for the decoding of the subsequent picture. As will be appreciated, the method parses data from a data stream into a sequence of data blocks on a cycle-by-cycle basis such that at least one data block earlier in the sequence is skipped during a cycle if a data block later in the sequence includes an empty data location closer to DC components than in the earlier data block.

In another embodiment according to the present invention, a temporary matrix may be created for each block and the corresponding locations of the temporary matrix may be marked for the completion of decoding for coded data (for example, set to 1), instead of storing previously coded locations (locations filled with data). In the present embodiment, when it is determined whether the current location indicated by the location variable 61a is a decoded location at step S35, the determination is performed by examining whether the value at the location of the temporary matrix corresponding to the location variable is marked for the completion of decoding.

When a location filled with data is determined according to another embodiment described in the encoding process at step S35, whether a location indicated by an element value 'vector[scanidx]', which is obtained by substituting the value of the location variable 61a for a previously designated transform vector 'vector [ ]', instead of the value of the location variable 61a, is a location already filled with data may be determined. Instead of the previously designated transform vector, a transform vector is constructed based on a mode value (in the above-described example, 0, 1 or 2) received from the encoding apparatus, and information accompanying the mode value (in the case where the mode value is 1 or 2) is used.

Through the above-described process, an FGS data stream (both significance data and refinement data) is completely restored to pictures in a DCT domain and is transmitted to a following decoder 620. To decode each SNR enhancement frame, the decoder 620 performs inverse quantization and an inverse transform first, and then, as illustrated in FIG. 2B, restores the video data of a current macroblock by adding the data of a reference block, which is designated by a motion vector and was decoded in advance, to the residual data of the macroblock, with respect to the macroblock of a current frame.

The above-described decoding apparatus may be mounted in a mobile communication terminal or an apparatus for playing recording media.

The present invention, described in detail via the limited embodiments, more likely allows more data, which pertains to data affecting the improvement of video quality and which is closer to DC components, to be transmitted to the decoding apparatus, and therefore high-quality video signals can be provided on average regardless of the change of a transmission channel.

Next, further example embodiments of the present invention will be described in detail.

In an embodiment of the present invention, during the encoding process, the motion vector mv(Xb) of a Fine Granular Scalability (FGS) base layer collocated block Xb is finely adjusted to improve the coding efficiency of Progressive FGS (PFGS).

That is, the embodiment obtains the FGS enhanced layer frame for the FGS enhanced layer block X to be encoded as the FGS enhanced layer frame temporally coincident with the base layer reference frame for the base layer block Xb collocated with respect to the FGS enhanced layer block X. In this embodiment, this base layer reference frame will be indicated in a reference picture index of the collocated block Xb; however, it is common for those skilled in the art to refer to the reference frame as being pointed to by the motion vector. Given the enhanced layer reference frame, a region (e.g., a partial region) of a picture is reconstructed from the FGS enhanced layer reference frame. This region includes a block indicated by the motion vector mv(Xb) for the base layer collated block Xb. The region is searched to obtain the block having the smallest image difference with respect to the block X, that is, a block Re', causing the Sum of Absolute Differences (SAD) to be minimized. The SAD is the sum of absolute differences between corresponding pixels in the two blocks. Then, a motion vector mv(X) from the block X to the selected block is calculated.

In this case, in order to reduce the burden of the search, the search range can be limited to a region including predetermined pixels in horizontal and vertical directions around the block indicated by the motion vector mv(Xb). For example, the search can be performed with respect only to the region extended by 1 pixel in every direction.

Further, the search resolution, that is, the unit by which the block X is moved to find a block having a minimum SAD, may be a pixel, a 1/2 pixel (half pel), or a 1/4 pixel (quarter pel).

In particular, when a search is performed with respect only to the region extended by 1 pixel in every direction, and is performed on a pixel basis, the location at which SAD is minimized is selected from among 9 candidate locations, as shown in FIG. 7.

If the search range is limited in this way, the difference vector mvd_ref_fgs between the calculated motion vector mv(X) and the motion vector mv (Xb), as shown in FIG. 7, is transmitted in the FGS enhanced layer. The FGS enhanced layer reference block associated with the obtained motion vector mv (x) is the enhanced layer reference block Re' (see also FIG. 2B).

In another embodiment of the present invention, in order to obtain an optimal motion vector mv_fgs for the FGS enhanced layer for the block X, that is, in order to generate the optimal predicted image of the FGS enhanced layer for the block X, motion estimation/prediction operations are performed independent of the motion vector mv (Xb) for the FGS base layer collocated block Xb corresponding to the block X, as shown in FIG. 8.

In this case, the FGS enhanced layer predicted image (FGS enhanced layer reference block) for the block X can be searched for in the reference frame indicated by the motion vector mv (Xb) (i.e., indicated by the reference picture index for the block Xb), or the reference block for the block X can be searched for in another frame. As with the embodiment of Fig. 7, the obtained FGS enhanced layer reference block associated with the motion vector mv(X) is the enhanced layer reference block Re'.

In the former case, there are advantages in that frames in which the FGS enhanced layer reference block for the block X is to be searched for are limited to the reference frame indicated by the motion vector mv(Xb), so that the burden of encoding is reduced, and there is no need to transmit a reference index for the block X that includes the reference block.

In the latter case, there are disadvantages in that the number of frames, in which the reference block is to be searched for, increases, so that the burden of encoding increases, and a reference index for the frame, including a found reference block, must be additionally transmitted. But, there is an advantage in that the optimal predicted image of the FGS enhanced layer for the block X can be generated.

When a motion vector is encoded without change, a great number of bits are required. Since the motion vectors of neighboring blocks have a tendency to be highly correlated, respective motion vectors can be predicted from the motion vectors of surrounding blocks that have been previously encoded (immediate left, immediate upper and immediate upper-right blocks).

When a current motion vector mv is encoded, generally, the difference mvd between the current motion vector mv and a motion vector mvp, which is predicted from the motion vectors of surrounding blocks, is encoded and transmitted.

Therefore, the motion vector mv_fgs of the FGS enhanced layer for the block X that is obtained through an independent motion prediction operation is encoded by mvd_fgs = mv_fgs - mvp_fgs. In this case, the motion vector mvp_fgs, predicted and obtained from the surrounding blocks, can be implemented using the motion vector mvp, obtained when the motion vector mv(Xb) of the FGS base layer collocated block Xb is encoded, without change (e.g., mvp = mv(Xb)), or using a motion vector derived from the motion vector mvp (e. g. , mvp = scaled version of mv (Xb) ) .

If the number of motion vectors of the FGS base layer collocated block Xb corresponding to the block X is two, that is, if the block Xb is predicted using two reference frames, two pieces of data related to the encoding of the motion vector of the FGS enhanced layer for the block X are obtained. For example, in a first embodiment, the pieces of data are mvd_ref_fgs_10/11, and in a second embodiment, the pieces of data are mvd_fgs_10/11.

In the above embodiments, the motion vectors for macroblocks (or image blocks smaller than macroblocks) are calculated in relation to the FGS enhanced layer, and the calculated motion vectors are included in a macroblock layer within the FGS enhanced layer and transmitted to a decoder. However, in the conventional FGS enhanced layer, related information is defined on the basis of a slice level, and is not defined on the basis of a macroblock level, a sub-macroblock level, or sub-block level.

Therefore, in the present invention, in order to define, in the FGS enhanced layer, data related to the motion vectors calculated on the basis of a macroblock (or an image block smaller than a macroblock), syntax required to define a macroblock layer and/or an image block layer smaller than a macroblock layer, for example, progressive_refinement_macroblock_layer_in_scalable_extensio n() and progressive_refinement_mb (and/or sub_mb)_pred_in_scalable_extension (), is newly defined, and the calculated motion vectors are recorded in the newly defined syntax and then transmitted.

Meanwhile, the generation of the FGS enhanced layer is similar to a procedure of performing prediction between a base layer and an enhanced layer having different spatial resolutions in an intra base prediction mode, and generating residual data which is an image difference.

For example, if it is assumed that the block of the enhanced layer is X and the block of the base layer corresponding to the block X is Xb, the residual block obtained through intra base prediction is R = X - Xb. In this case, X can correspond to the block of a quality enhanced layer to be encoded, Xb can correspond to the block of a quality base layer, and R = X - Xb can correspond to residual data to be encoded in the FGS enhanced layer for the block X.

In another embodiment of the present invention, an intra mode prediction method is applied to the residual block R to reduce the amount of residual data to be encoded in the FGS enhanced layer. In order to perform intra mode prediction on the residual block R, the same mode information about the intra mode that is used in the base layer collocated block Xb corresponding to the block X is used.

A block Rd having a difference value of the residual data is obtained by applying the mode information, used in the block Xb, to the residual block R. Discrete Cosine Transform (DCT) is performed on the obtained block Rd, and the DCT results are quantized using a quantization step size set smaller than the quantization step size used when the FGS base layer data for the block Xb is generated, thus generating FGS enhanced layer data for the block X.

In a further embodiment, an adapted reference block Ra' for the block X is generated as equal to the FGS enhanced layer reference block Re'. Further, residual data R to be encoded in the FGS enhanced layer for the block X is set as R = X - Ra, so that an intra mode prediction method is applied to the residual block R. It will be appreciated that in this embodiment, the enhanced layer reference block Re', and therefore, the adapted reference block Ra', are reconstructed pictures and not at the transform coefficient level. This is the embodiment graphically illustrated in FIG. 2B.

In this case, an intra mode applied to the residual block R is a DC mode based on the mean value of respective pixels in the block R. Further, if the block Re' is generated by the methods according to embodiments of the present invention, information related to motion required to generate the block Re' in the decoder is included in the FGS enhanced layer data for the block X.

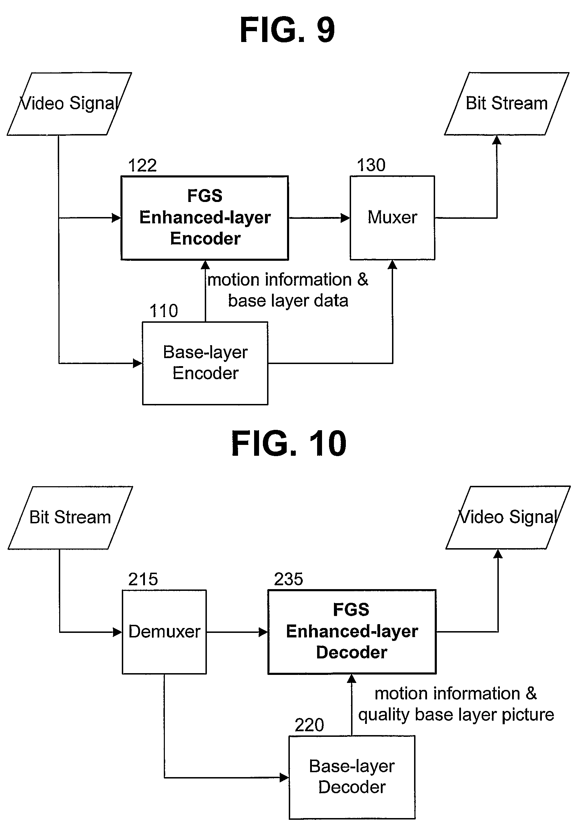

FIG. 9 is a block diagram of an apparatus which encodes a video signal and to which the present invention may be applied.

The video signal encoding apparatus of FIG. 4 includes a base layer (BL) encoder 110 for performing motion prediction on an image signal, input as a frame sequence, using a predetermined method; performing DCT on motion prediction results; quantizing the DCT transform results, using a predetermined quantization step size; and generating base layer data. An FGS enhanced layer (FGS_EL) encoder 122 generates the FGS enhanced layer of a current frame using the motion information, the base layer data that are provided by the BL encoder 110, and the FGS enhanced layer data of a frame (for example, a previous frame) which is a reference for motion estimation for the current frame. The FGS enhanced layer encoder 122 may include, for example, the elements illustrated in FIG. 2A. Because the operation of the significance unit 23 was described in detail below, it will not be repeated here in the description of FIG. 9. A muxer 130 multiplexes the output data of the BL encoder 110 and the output data of the FGS_EL encoder 122 using a predetermined method, and outputs multiplexed data.

The FGS_EL encoder 122 reconstructs the quality base layer of the reference frame (also called a FGS base layer picture), which is the reference for motion prediction for a current frame, from the base layer data provided by the BL encoder 110, and reconstructs the FGS enhanced layer picture of the reference frame using the FGS enhanced layer data of the reference frame and the reconstructed quality base layer of the reference frame.

In this case, the reference frame may be a frame indicated by the motion vector mv (Xb) of the FGS base layer collocated block Xb corresponding to the block X in the current frame.

When the reference frame is a frame previous to the current frame, the FGS enhanced layer picture of the reference frame may have been stored in a buffer in advance.

Thereafter, the FGS_EL encoder 122 searches the FGS enhanced layer picture of the reconstructed reference frame for an FGS enhanced layer reference image for the block X, that is, a reference block or predicted block Re' in which an SAD with respect to the block X is minimized, and then calculates a motion vector mv (X) from the block X to the found reference block Re'.

The FGS_EL encoder 122 performs DCT on the difference between the block X and the found reference block Re', and quantizes the DCT results using a quantization step size set smaller than a predetermined quantization step (quantization step size used when the BL encoder 110 generates the FGS base layer data for the block Xb), thus generating FGS enhanced layer data for the block X.

When the reference block is predicted, the FGS_EL encoder 122 may limit the search range to a region including predetermined pixels in horizontal and vertical directions around the block indicated by the motion vector mv(Xb) so as to reduce the burden of the search, as in the first embodiment of the present invention. In this case, the FGS_EL encoder 122 records the difference mvd_ref_fgs between the calculated motion vector mv(X) and the motion vector mv(Xb) in the FGS enhanced layer in association with the block X.

Further, as in the case of the above-described second embodiment of the present invention, the FGS_EL encoder 122 may perform a motion estimation operation independent of the motion vector mv(Xb) so as to obtain the optimal motion vector mv_fgs of the FGS enhanced layer for the block X; thus searching for a reference block Re' having a minimum SAD with respect to the block X, and calculating the motion vector mv_fgs from the block X to the found reference block Re.

In this case, the FGS enhanced layer reference block for the block X may be searched for in the reference frame indicated by the motion vector mv(Xb), or a reference block for the block X may be searched for in a frame other than the reference frame.

The FGS_EL encoder 122 performs DCT on the difference between the block X and the found reference block Re', and quantizes the DCT results using a quantization step size set smaller than the predetermined quantization step size; thus generating the FGS enhanced layer data for the block X.

Further, the FGS_EL encoder 122 records the difference mvd_fgs between the calculated motion vector mv_fgs and the motion vector mvp_fgs, predicted and obtained from surrounding blocks, in the FGS enhanced layer in association with the block X. That is, the FGS_EL encoder 122 records syntax for defining information related to the motion vector calculated on a block basis (a macroblock or an image block smaller than a macroblock), in the FGS enhanced layer.

When the reference block Re' for the block X is searched for in a frame other than the reference frame indicated by the motion vector mv(Xb), information related to the motion vector may further include a reference index for a frame including the found reference block Re'.

The encoded data stream is transmitted to a decoding apparatus in a wired or wireless manner, or is transferred through a recording medium.

FIG. 10 is a block diagram of an apparatus which decodes an encoded data stream and to which the present invention may be applied. The decoding apparatus of FIG. 5 includes a demuxer 215 for separating a received data stream into a base layer stream and an enhanced layer stream; a base layer (BL) decoder 220 for decoding an input base layer stream using a preset method; and an FGS_EL decoder 235 for generating the FGS enhanced layer picture of a current frame using the motion information, the reconstructed quality base layer (or FGS base layer data) that are provided by the BL decoder 220, and the FGS enhanced layer stream. The FGS_EL decoder 235 may include, for example, the elements illustrated in FIG. 6. Because the operation of the significance unit 611 was described in detail above, it will not be repeated here in the description of FIG. 10.

The FGS_EL decoder 230 checks information about the block X in the current frame, that is, information related to a motion vector used for motion prediction for the block X, in the FGS enhanced layer stream.

When i) the FGS enhanced layer for the block X in the current frame is encoded on the basis of the FGS enhanced layer picture of another frame and ii) is encoded using a block other than the block indicated by the motion vector mv(Xb) of the block Xb corresponding to the block X (that is the FGS base layer block of the current frame) as a predicted block or a reference block, motion information for indicating the other block is included in the FGS enhanced layer data of the current frame.

That is, in the above description, the FGS enhanced layer includes syntax for defining information related to the motion vector calculated on a block basis (a macroblock or an image block smaller than a macroblock). The information related to the motion vector may further include an index for the reference frame in which the FGS enhanced layer reference block for the block X is found (the reference frame including the reference block).

When motion information related to the block X in the current frame exists in the FGS enhanced layer of the current frame, the FGS_EL decoder 235 generates the FGS enhanced layer picture of the reference frame using the quality base layer of the reference frame (the FGS base layer picture reconstructed by the BL decoder 220 may be provided, or may be reconstructed from the FGS base layer data provided by the BL decoder 220), which is the reference for motion prediction for the current frame, and the FGS enhanced layer data of the reference frame. In this case, the reference frame may be a frame indicated by the motion vector mv(Xb) of the block Xb.

Further, the FGS enhanced layer of the reference frame may be encoded using an FGS enhanced layer picture of a different frame. In this case, a picture reconstructed from the different frame is used to reconstruct the reference frame. Further, when the reference frame is a frame previous to the current frame, the FGS enhanced layer picture may have been generated in advance and stored in a buffer.

Further, the FGS_EL decoder 235 obtains the FGS enhanced layer reference block Re' for the block X from the FGS enhanced layer picture of the reference frame, using the motion information related to the block X.

In the above-described first embodiment of the present invention, the motion vector mv(X) from the block X to the reference block Re' is obtained as the sum of the motion information mv_ref_fgs, included in an FGS enhanced layer stream for the block X, and the motion vector mv(Xb) of the block Xb.

Further, in the second embodiment of the present invention, the motion vector mv(X) is obtained as the sum of the motion information mvd_fgs, included in the FGS enhanced layer stream for the block X, and the motion vector mvp_fgs, predicted and obtained from the surrounding blocks. In this case, the motion vector mvp_fgs may be implemented using the motion vector mvp, which is obtained at the time of calculating the motion vector mv (Xb) of the FGS base layer collocated block Xb without change, or using a motion vector derived from the motion vector mvp.

Thereafter, the FGS_EL decoder 235 performs inverse-quantization and inverse DCT on the FGS enhanced layer data for the block X, and adds the results of inverse quantization and inverse DCT to the obtained reference block Re', thus generating the FGS enhanced layer picture for the block X.

The above-described decoding apparatus may be mounted in a mobile communication terminal, or a device for reproducing recording media.

As described above, the present invention is advantageous in that it can efficiently perform motion estimation/prediction operations on an FGS enhanced layer picture when the FGS enhanced layer is encoded or decoded, and can efficiently transmit motion information required to reconstruct an FGS enhanced layer picture.

## Claims

1. A method of reconstructing image blocks in a first picture layer, comprising:
parsing data of the first picture layer from a data stream into a sequence of image blocks;
generating a motion vector of each image block in the first picture layer based on motion vector information for a block in a second picture layer and motion vector difference information associated with the image block of the first picture layer, the second picture layer representing lower quality pictures than pictures represented by the first picture layer, and the block of the second picture layer being temporally associated with the image block in the first picture layer;
obtaining prediction value of the image block in the first picture layer based on the generated motion vector;
obtaining a residual data of the image block in the first picture layer using intra prediction and a difference value of residual data in the parsed data; and
reconstructing the image block based on the prediction value of the image block in the first picture layer and the residual data of the image block in the first picture layer ;
**characterised in, that** the parsing comprises:
first-obtaining transform coefficient information of a first image block along a zigzag scan path by parsing the data up to the next non-zero data value from the data stream, the first-obtaining being repeated for each subsequent image block during a N^{th} cycle;
deriving a decoded location variable (dsbidx) for each of the image blocks from a value representing a data location which has the non-zero data value found in the step of first-obtaining transform coefficient information;
increasing a scan location variable (dscanidx) by one when the N^{th} cycle is finished, the scan location variable representing a current cycle;
checking whether the obtained transform coefficient information of the first image block exists at the data location represented by the increased scan location variable by determining whether the derived decoded location variable is greater than or less than or equal to the increased scan location variable, the checking being repeated for the each subsequent image block during a (N+1)^{th} cycle;
when the obtained transform coefficient information of the first image block does not exist at the data location represented by the increased scan location variable, second-obtaining the transform coefficient information of the first image block along the zigzag scan path by parsing next data from the previous non-zero data value up to the next non-zero data value from the data stream,
wherein it is determined that the obtained transform coefficient information of the first image block does not exist at the data location represented by the increased scan location variable when the derived decoded location variable is less than the increased scan location variable;
when the obtained transform coefficient information of the first image block exists at the data location represented by the increased scan location variable,
skipping parsing the next data from the previous non-zero data value up to the next non-zero data value from the data stream, wherein it is determined that the obtained transform coefficient information of the first image block exists at the data location represented by the increased scan location variable when the derived decoded location variable is greater than or equal to the increased scan location variable,
wherein the second-obtaining or skipping is repeated for each subsequent image block during a (N+1)^{th} cycle.

2. The method of claim 1, wherein
the sequence of image blocks represents an enhanced layer of video data associated with a base layer of video data, the enhanced layer of the video data for enhancing the video represented by the base layer of the video data; and the data location of the image block corresponds to the non-zero data value if a corresponding data location in the base layer of the video data includes the non-zero data value.

3. An apparatus for reconstructing images blocks in a first picture layer, comprising:
a first decoder including a first decoding unit and a second decoding unit, the first decoding unit parsing data of the first picture layer from a data stream into a sequence of image blocks;
the second decoding unit generating a motion vector of each image block in the first picture layer based on motion vector information for a block in a second picture layer and motion vector difference information associated with the image block of the first picture layer, the second picture layer representing lower quality pictures than pictures represented by the first picture layer, and the block of the second picture layer being temporally associated with the image block in the first picture layer; and
the second decoding unit obtaining prediction value of the image block in the first picture layer based on the generated motion vector, obtaining a residual data of the image block in the first picture layer using intra prediction and a difference value of residual data in the parsed data and reconstructing the image block based on the prediction value of the image block in the first picture layer and the residual data of the image block in the first picture layer; and
a second decoder obtaining the motion vector information from the second picture layer and sending the motion vector information to the first decoder,
**characterized by**
the first decoding unit:
- first-obtaining transform coefficient information of a first image block along a zigzag scan path by parsing the data up to the next non-zero data value from the data stream, the first-obtaining being repeated for each subsequent image block during a N^{th} cycle,
- deriving a decoded location variable (dsbidx) for each of the image blocks from a value representing a data location which has the non-zero data value found in the step of first-obtaining transform coefficient information,
- increasing a scan location variable (dscanidx) by one when the N^{th} cycle is finished, the scan location variable representing a current cycle,
- checking whether the obtained transform coefficient information of the first image block exists at the data location represented by the increased scan location variable by determining whether the derived decoded location variable is greater than or less than or equal to the increased scan location variable, the checking being repeated for the each subsequent image block during a (N+1)^{th} cycle,
- second-obtaining the transform coefficient information of the first image block along the zigzag scan path by parsing next data from the previous non-zero data value up to the next non-zero data value from the data stream when the obtained transform coefficient information of the first image block does not exist at the data location represented by the increased scan location variable, wherein it is determined that the obtained transform coefficient information of the first image block does not exist at the data location represented by the increased scan location variable when the derived decoded location variable is less than the increased scan location variable, and
- skipping parsing the next data from the previous non-zero data value up to the next non-zero data value from the data stream when the obtained transform coefficient information of the first image block exists at the data location represented by the increased scan location variable, wherein it is determined that the obtained transform coefficient information of the first image block exists at the data location represented by the increased scan location variable when the derived decoded location variable is greater than or equal to the increased scan location variable,
wherein the second-obtaining or skipping is repeated for each subsequent image block during a (N+1)^{th} cycle.

## Patentansprüche

1. Verfahren zum Wiederherstellen von Bildblöcken in einer ersten Bildebene, aufweisend:
Parsen von Daten der ersten Bildebene eines Datenstroms in eine Sequenz von Bildblöcken;
Erzeugen eines Bewegungsvektors für jeden Bildblock in der ersten Bildebene basierend auf Bewegungssektor-Informationen eines Blocks in einer zweiten Bildebene und Bewegungsvektorunterschied-Informationen, welche mit dem Bildblock der ersten Bildebene assoziiert sind, wobei die zweite Bildebene Bilder niedrigerer Qualität repräsentiert, als der Bilder welche durch die erste Bildebene repräsentiert werden, und der Block in der zweiten Bildebene temporär dem Bildblock in der ersten Bildebene zugeordnet ist;
Erhalten eines Vorhersagewertes für den Bildblock in der ersten Bildebene basierend auf dem erzeugten Bewegungsvektor;
Erhalten von Restdaten des Bildblocks in der ersten Bildebene unter Verwendung einer Intra-Vorhersage und eines Differenzwertes der Restdaten in den geparsten Daten; und
Wiederherstellen des Bildblocks basierend auf dem Vorhersagewert des Bildblocks in der ersten Bildebene und den Restdaten des Bildblocks in der ersten Bildebene;
**dadurch gekennzeichnet, dass** das Parsen aufweist:
ein erstes Erhalten einer Transformationskoeffizienten-Information eines ersten Bildblocks entlang eines Zickzack-Abtastpfades durch Parsen der Daten bis zu dem nächsten Nicht-null-Datenwert des Datenstroms, wobei das erste Erhalten während eines N^{ten}-Zyklus für jeden nachfolgenden Bildblock wiederholt wird;
Erhalten einer decodierten Positionsvariablen (dsbidx) für jeden der Bildblöcke aus Werten, welche eine Datenposition repräsentieren, an welcher der Nicht null-Datenwert in dem Schritt des ersten Erhaltens der Transformationskoeffizienten-Information gefunden worden ist;
Erhöhen einer Abtastpositionsvariablen (dscanidx) um eins, wenn der N^{te} Zyklus beendet wurde, wobei die Abtastpositionsvariable einen gegenwärtigen Zyklus repräsentiert;
Prüfen, ob die erhaltene Transformationskoeffizienten-Information des ersten Bildblocks an der durch die erhöhte Scanpositionsvariable repräsentierten Datenposition existiert, durch Feststellen, ob die erhaltene decodierte Positionsvariable größer ist oder kleiner oder gleich der erhöhten Scanpositionsvariablen, wobei das Prüfen für jeden der nachfolgenden Bildblöcke während eines (N+1)^{ten} Zyklus wiederholt wird;
wenn die erhaltene, Transformationskoeffizienten-Information des ersten Bildblocks an der Datenposition, welche durch die erhöhte Scanpositionsvariable repräsentiert wird, nicht existiert, zweites Erhalten der Transformationskoeffizienten-Information des ersten Bildblocks entlang des Zickzack-Abtastpfades durch Parsen der nächsten Daten von dem vorangegangenen Nicht-null-Datenwert bis zum nächsten Nicht-null-Datenwert des Datenstroms, wobei festgestellt wird, dass die erhaltene Transformationskoeffizienten-Information des ersten Bildblocks an der Datenposition, welche durch die erhöhte Scanpositionsvariable repräsentiert wird, nicht existiert, wenn die erhaltene decodierte Positionsvariable kleiner als die erhöhte Scanpositionsvariable ist;
wenn die erhaltene Transformationskoeffizienten-Information des ersten Bildblocks an der Datenposition, welche durch die erhöhte Scanpositionsvariable repräsentiert wird, existiert, Überspringen des Parsens der nächsten Daten von dem vorangegangenen Nicht-null-Datenwert bis zu dem nächsten Nicht-null-Datenwert des Datenstroms, wenn festgestellt wurde, dass die erhaltene Transformationskoeffizienten-Information des ersten Bildblocks an der Datenposition existiert, welche durch die erhöhte Scanpositionsvariable repräsentiert wird, wenn die erhaltene decodierte Positionsvariable größer als oder gleich der erhöhten Scanpositionsvariable ist,
wobei das zweite Erhalten oder Überspringen für jeden nachfolgenden Bildblock während eines (N+1)^{ten} Zyklus wiederholt wird.

2. Verfahren nach Anspruch 1, wobei
die Reihenfolge der Bildblöcke eine verbesserte Schicht der Videodaten repräsentiert, welche mit einer Basisschicht der Videodaten assoziiert ist, wobei die verbesserte Schicht der Videodaten dazu dient, das durch die Basisschicht der Videodaten repräsentierte Video zu verbessern; und
die Datenposition des Bildblocks dem Nicht-null-Datenwert entspricht, wenn eine entsprechende Datenposition in der Basisschicht der Videodaten den Nicht-null-Datenwert aufweist.

3. Vorrichtung zum Wiederherstellen von Bildblöcken in einer ersten Bildebene, aufweisend:
einen ersten Decoder, welcher eine erste Decodiereinheit und eine zweite Decodiereinheit umfasst,
wobei die erste Decodiereinheit Daten der ersten Bildebene eines Datenstroms in eine Folge von Bildblöcken parst;
wobei die zweite Decodiereinheit für jeden Bildblock in der ersten Bildebene basierend auf Bewegungsinformationen für einen Block in einer zweiten Bildebene und Bewegungsvektor-Differenz-Informationen, welche mit dem Bildblock in der ersten Bildebene assoziiert ist, einen Bewegungsvektor erzeugt, wobei die zweite Bildebene ein Bild niedrigerer Qualität als die durch die erste Bildebene repräsentierten Bilder repräsentiert, und der Block in der zweiten Bildebene temporär mit dem Bildblock in der ersten Bildebene assoziiert ist; und
die zweite Decodiereinheit ein Vorhersagewert für den Bildblock in der ersten Bildebene basierend auf dem erhaltenen Bewegungsvektor erhält, Restdaten des Bildblocks in der ersten Bildebene unter Verwendung von Intra-Vorhersage und einem Differenzwert für die Restdaten in den geparsten Daten erhält, und den Bildblock basierend auf dem Vorhersagewert für den Bildblock in der ersten Bildebene und den Restdaten des Bildblocks in der ersten Bildebene wiederherstellt; und
ein zweiter Decoder die Bewegungsvektoren von der zweiten Bildebene erhält und die Bewegungsvektor-Information an den ersten Decoder sendet,
**dadurch gekennzeichnet, dass** die erste Decodiereinheit ausführt:
- ein erstes Erhalten einer Transformationskoeffizienten-Information des ersten Bildblocks entlang eines Zickzack-Abtastpfades durch Parsen der Daten bis zu dem nächsten Nicht-null-Datenwert des Datenstroms, wobei das erste Erhalten während eines N^{ten}-Zyklus für jeden nachfolgenden Bildblock wiederholt wird,
- Erzeugen einer decodierten Positionsvariablen (dsbidx) für jeden der Bildblöcke aus einem Wert, welcher eine Datenposition, an welcher in dem Schritt des ersten Erhaltens der Transformationskoeffizienten-Information der Nicht-null-Datenwert gefunden wurde, repräsentiert,
- Erhöhen einer Abtastpositionsvariablen (dscanidx) um eins, wenn der N^{te}-Zyklus beendet wurde, wobei die Abtastpositionsvariable einen gegenwärtigen Zyklus repräsentiert,
- Prüfen, ob die erhaltene Transformationskoeffizienten-Information des ersten Bildblocks an der Datenposition, welche durch die erhöhte Abtastpositionsvariable repräsentiert wird, existiert, indem bestimmt wird, ob die erhaltene decodierte Positionsvariable größer als oder kleiner als oder gleich der erhöhten Abtastpositionsvariable ist, wobei das Prüfen während eines (N+1)^{ten} Zyklus für jeden nachfolgenden Bildblock wiederholt wird,
- ein zweites Erhalten der Transformationskoeffizienten-Information des ersten Bildblocks entlang des Zickzack-Abtastpfades durch Parsen der nächsten Daten von dem vorangegangenen Nicht-null-Datenwert bis zum nächsten Nicht-null-Datenwert des Datenstroms, wenn die erhaltene Transformationskoeffizienten-Information des ersten Bildblocks an der Datenposition, welche durch die erhöhte Scanpositionsvariable repräsentiert wird, nicht existiert, wobei bestimmt wird, dass die erhaltene Transformationskoeffizienten-Information des ersten Bildblocks an der Datenposition, welche durch die erhöhte Scanpositionsvariable repräsentiert wird, nicht existiert, wenn die erhaltene decodierte Positionsvariable kleiner als die erhöhte Scanpositionsvariable ist, und
- Überspringen des Parsens der nächsten Daten von dem vorangegangenen Nicht-null-Datenwert bis zum nächsten Nicht-null-Datenwert des Datenstroms, wenn die erhaltene Transformationskoeffizienten-Information des ersten Bildblocks an der Datenposition, welche durch die erhöhte Scanpositionsvariable repräsentiert wird, existiert, wobei festgestellt wird, dass die erhaltene Transformationskoeffizienten-Information des ersten Bildblocks an der Datenposition, welche durch die erhöhte Scanpositionsvariable repräsentiert wird, existiert, wenn die erhaltene decodierte Positionsvariable größer als oder gleich der erhöhten Scanpositionsvariablen ist,
wobei das zweite Erhalten oder Überspringen während eines (N+1)^{ten} Zyklus für jeden nachfolgenden Bildblock wiederholt wird.

## Revendications

1. Procédé de reconstruction de blocs d'images dans une première couche d'images, comprenant :
analyser les données de la première couche d'images à partir d'un flux de données dans une séquence de blocs d'images ;
générer un vecteur mouvement de chaque bloc d'image dans la première couche d'images sur la base d'informations de vecteur mouvement pour un bloc dans une seconde couche d'images et d'informations de différence de vecteur mouvement associées au bloc d'image de la première couche d'images, la seconde couche d'images représentant des images de qualité inférieure aux images représentées par la première couche d'images, et le bloc de la seconde couche d'images étant temporellement associé au bloc d'image dans la première couche d'images ;
obtenir une valeur de prédiction du bloc d'image dans la première couche d'images sur la base du vecteur mouvement généré ;
obtenir une donnée résiduelle du bloc d'image dans la première couche d'images en utilisant une intra-prédiction et une valeur de différence de donnée résiduelle dans les données analysées ; et
reconstruire le bloc d'image sur la base de la valeur de prédiction du bloc d'image dans la première couche d'images et de la donnée résiduelle du bloc d'image dans la première couche d'images ;
**caractérisé en ce que** l'analyse comprend :
obtenir en premier lieu une information de coefficient de transformée d'un premier bloc d'image le long d'un chemin de balayage en zigzag en analysant les données jusqu'à la valeur de donnée non nulle suivante à partir du flux de données, la première obtention étant répétée pour chaque bloc d'image subséquent pendant un N^{ème} cycle ;
déduire une variable d'emplacement décodée (dsbidx) pour chacun des blocs d'images à partir d'une valeur représentant un emplacement de donnée qui a la valeur de donnée non nulle trouvée à l'étape de la première obtention de l'information de coefficient de transformée ;
incrémenter une variable d'emplacement de balayage (dscanidx) de un lorsque le N^{ème} cycle est fini, la variable d'emplacement de balayage représentant un cycle actuel ;
vérifier si l'information de coefficient de transformée obtenue du premier bloc d'image existe à l'emplacement de donnée représenté par la variable d'emplacement de balayage incrémentée en déterminant si la variable d'emplacement décodée déduite est supérieure ou inférieure ou égale à la variable d'emplacement de balayage incrémentée, le contrôle étant répété pour chaque bloc d'image subséquent pendant un (N+1)^{ème} cycle ;
lorsque l'information de coefficient de transformée obtenue du premier bloc d'image n'existe pas à l'emplacement de donnée représenté par la variable d'emplacement de balayage incrémentée, obtenir en second lieu l'information de coefficient de transformée du premier bloc d'image le long du chemin de balayage en zigzag en analysant les données suivantes de la valeur de donnée non nulle précédente à la valeur de donnée non nulle suivante à partir du flux de données, dans lequel il est déterminé que l'information de coefficient de transformée obtenue du premier bloc d'image n'existe pas à l'emplacement de donnée représenté par la variable d'emplacement de balayage incrémentée lorsque la variable d'emplacement décodée déduite est inférieure à la variable d'emplacement de balayage incrémentée ;
lorsque l'information de coefficient de transformée obtenue du premier bloc d'image existe à l'emplacement de donnée représenté par la variable d'emplacement de balayage incrémentée, sauter l'analyse des données suivantes de la valeur de donnée non nulle précédente à la valeur de donnée non nulle suivante à partir du flux de données, dans lequel il est déterminé que l'information de coefficient de transformée obtenue du premier bloc d'image existe à l'emplacement de donnée représenté par la variable d'emplacement de balayage incrémentée lorsque la variable d'emplacement décodée déduite est supérieure ou égale à la variable d'emplacement de balayage incrémentée,
dans lequel la seconde obtention ou le saut est répété pour chaque bloc d'image subséquent pendant un (N+1)^{ème} cycle.

2. Procédé selon la revendication 1, dans lequel la séquence de blocs d'images représente une couche améliorée de données vidéo associée à une couche de base de données vidéo, la couche améliorée des données vidéo pour améliorer la vidéo représentée par la couche de base des données vidéo ; et l'emplacement de données du bloc d'image correspond à la valeur de donnée non nulle si un emplacement de donnée correspondant dans la couche de base des données vidéo inclut la valeur de donnée non nulle.

3. Appareil pour reconstruire des blocs d'images dans une première couche d'images, comprenant :
un premier décodeur incluant une première unité de décodage et une seconde unité de décodage, la première unité de décodage analysant des données de la première couche d'images à partir d'un flux de données dans une séquence de blocs d'images ;
la seconde unité de décodage générant un vecteur mouvement de chaque bloc d'image dans la première couche d'images sur la base d'une information de vecteur mouvement pour un bloc dans une seconde couche d'images et une information de différence de vecteur mouvement associée au bloc d'image de la première couche d'images,
la seconde couche d'images représentant des images de qualité inférieure aux images représentées par la première couche d'images, et le bloc de la seconde couche d'images étant temporellement associé au bloc d'image dans la première couche d'images ; et
la seconde unité de décodage obtenant une valeur de prédiction du bloc d'image dans la première couche d'images sur la base du vecteur mouvement généré, obtenant une donnée résiduelle du bloc d'image dans la première couche d'images en utilisant une intra-prédiction et une valeur de différence de donnée résiduelle dans les données analysées et reconstruire le bloc d'image sur la base de la valeur de prédiction du bloc d'image dans la première couche d'images et des données résiduelles du bloc d'image dans la première couche d'images ; et
un second décodeur obtenant l'information de vecteur mouvement à partir de la seconde couche d'images et envoyant l'information de vecteur mouvement au premier décodeur,
**caractérisé en ce que**
la première unité de décodage :
- obtient en premier lieu une information de coefficient de transformée d'un premier bloc d'image le long d'un chemin de balayage en zigzag en analysant les données jusqu'à la valeur de donnée non nulle suivante à partir du flux de données, la première obtention étant répétée pour chaque bloc d'image subséquent pendant un N^{ème} cycle,
- déduit une variable d'emplacement décodée (dsbidx) pour chacun des blocs d'images d'une valeur représentant un emplacement de donnée qui a la valeur de donnée non nulle trouvée à l'étape de première obtention d'une information de coefficient de transformée,
- incrémente une variable d'emplacement de balayage (dscanidx) de un lorsque le N^{ème} cycle est fini, la variable d'emplacement de balayage représentant un cycle actuel,
- vérifie si l'information de coefficient de transformée obtenue du premier bloc d'image existe à l'emplacement de donnée représenté par la variable d'emplacement de balayage incrémentée en déterminant si la variable d'emplacement décodée déduite est supérieure ou inférieure ou égale à la variable d'emplacement de balayage incrémentée, le contrôle étant répété pour chaque bloc d'image subséquent pendant un (N+1)^{ème} cycle,
- obtient en second lieu l'information de coefficient de transformée du premier bloc d'image le long du chemin de balayage en zigzag en analysant les données suivantes de la valeur de donnée non nulle précédente à la valeur de donnée non nulle suivante à partir du flux de données lorsque l'information de coefficient de transformée obtenue du premier bloc d'image n'existe pas à l'emplacement de donnée représenté par la variable d'emplacement de balayage incrémentée, dans lequel il est déterminé que l'information de coefficient de transformée obtenue du premier bloc d'image n'existe pas à l'emplacement de donnée représenté par la variable d'emplacement de balayage incrémentée lorsque la variable d'emplacement décodée déduite est inférieure à la variable d'emplacement de balayage incrémentée, et
- saute l'analyse des données suivantes de la valeur de donnée non nulle précédente à la valeur de donnée non nulle suivante à partir du flux de données lorsque l'information de coefficient de transformée obtenue du premier bloc d'image existe à l'emplacement de donnée représenté par la variable d'emplacement de balayage incrémentée, dans lequel il est déterminé que l'information de coefficient de transformée obtenue du premier bloc d'image existe à l'emplacement de donnée représenté par la variable d'emplacement de balayage incrémentée lorsque la variable d'emplacement décodée déduite est supérieure ou égale à la variable d'emplacement de balayage incrémentée,
dans lequel la seconde obtention ou le saut est répété pour chaque bloc d'image subséquent pendant un (N+1)^{ème} cycle.
